# EUROPÄISCHE PATENTSCHRIFT

(11) **EP 2 825 349 B1**
(45) Veröffentlichungstag und Bekanntmachung des Hinweises auf die Patenterteilung: **13.04.2016**
(21) Anmeldenummer: 13706417.6
(22) Anmeldetag: 24.01.2013
(51) Int. Cl.: B24B 13/04, B23B 29/26, B24B 41/02, B23Q 1/01

(54) **MASCHINE ZUR BEARBEITUNG VON OPTISCHEN WERKSTÜCKEN, INSBESONDERE VON KUNSTSTOFF-BRILLENGLÄSERN**
MACHINE FOR PROCESSING OPTICAL WORKPIECES, IN PARTICULAR PLASTIC SPECTACLE LENSES
MACHINE D'USINAGE DE PIÈCES OPTIQUES, EN PARTICULIER DE VERRES DE LUNETTES EN MATIÈRE PLASTIQUE

(30) Priorität: 11.03.2012 DE 102012004543
(43) Veröffentlichungstag der Anmeldung: 21.01.2015
(73) Patentinhaber: Satisloh AG, 6340 Baar (CH)
(72) Erfinder: WALLENDORF, Steffen, 35582 Wetzlar-Dutenhofen (DE); SCHÄFER, Holger, 35789 Weilmünster (DE); SAVOIE, Marc, 35578 Wetzlar (DE)
(74) Vertreter: Oppermann, Mark
(86) Internationale Anmeldenummer: PCT/EP2013/000212
(87) Internationale Veröffentlichungsnummer: WO 2013/135330

(56) Entgegenhaltungen:
- EP-A1- 1 719 573
- EP-A1- 2 226 153
- EP-A2- 0 849 038
- WO-A1-02/06005
- WO-A1-99/33611
- US-B1- 6 553 875

## Beschreibung

### TECHNISCHES GEBIET

Die vorliegende Erfindung bezieht sich allgemein auf eine Maschine zur Bearbeitung von optischen Werkstücken. Insbesondere bezieht sich die Erfindung auf eine Maschine zur Bearbeitung von Kunststoff-Brillengläsern, wie sie in sogenannten "RX-Werkstätten", d.h. Produktionsstätten zur Fertigung von individuellen Brillengläsern nach Rezept in großem Umfang zum Einsatz kommen.

### STAND DER TECHNIK

Üblicherweise liegt bei der Bearbeitung von Kunststoff-Brillengläsern ein aus Kunststoff (wie Polycarbonat, CR 39, HI-Index, etc.) spritzgegossener Brillenglasrohling, auch "Blank" genannt, vor, der eine standardisierte endbearbeitete konvexe Außenfläche mit z.B. sphärischer oder progressiver Form aufweist. Die in der Regel konkaven Innen- bzw. Rezeptflächen erhalten mittels spanender Bearbeitung eine sphärische, asphärische, torische, atorische, progressive oder Freiformgeometrie (Gleitsichtflächen), je nach der gewünschten optischen Wirkung. Der typische konventionelle Ablauf bei der Innenflächenbearbeitung sieht nach dem Aufblocken des Brillenglasrohlings mit seiner Außenfläche auf einem Blockstück einen Fräs- und/oder Drehbearbeitungsprozess zur Herstellung der optisch aktiven Form vor, in der Regel gefolgt von einem Feinschleif- oder Polierprozess zur Erzielung der notwendigen Oberflächengüte.

Für den oben erwähnten Drehbearbeitungsprozess werden im Stand der Technik auch sogenannte Fast-Tool-Drehmaschinen eingesetzt, bei denen ein Drehmeißel entweder linear reziprozierend (siehe z.B. die Druckschrift WO-A-02/06005) oder rotativ (vgl. beispielsweise die Druckschrift WO-A-99/33611) hochdynamisch bewegt werden kann, so dass nicht-rotationssymmetrische Linsenflächen im Drehverfahren erzeugt werden können. Um diese Technologie auch kleineren RX-Werkstätten bei im Verhältnis geringen Investitionskosten zugänglich zu machen, wurden im Stand der Technik (EP-A-1 719 573, EP-A-2 226 153) bereits kompakte Brillenglas-Drehmaschinen vorgeschlagen, die nur einen relativ kleinen Stellflächenbedarf haben.

Bei der in der Druckschrift EP-A-1 719 573 offenbarten Drehmaschine sind das Maschinenbett und das Maschinenoberteil unter Ausbildung aller Funktionsflächen und -räume als einteiliges Maschinengestell aus Polymerbeton geformt. Hierbei begrenzen das Maschinenbett und das Maschinenoberteil einen zentralen Arbeitsraum. In bezüglich des Arbeitsraums gegenüberliegender Anordnung sind auf horizontalen Montageflächen des Maschinenbetts eine Fast-Tool-Anordnung und eine Werkstückspindelanordnung befestigt, Letztere über eine sich parallel zu den Montageflächen erstreckende Querschlittenanordnung. Dieses Maschinengestell weist zwar gute Dämpfungseigenschaften auf, besitzt aufgrund der relativ großen Wandstärken des Polymerbetons jedoch ein hohes Eigengewicht, welches in dieser Druckschrift beispielsweise mit 1200 kg beziffert wird.

Demgegenüber wird in der Druckschrift EP-A-2 226 153 eine Brillenglas-Drehmaschine vorgeschlagen, deren Maschinenbett zwischen 100 kg und 500 kg wiegen soll. Hierbei ist das Maschinenbett als nach unten offenes Gussbett ausgebildet, mit Längs- und Querrippen, die insbesondere in Richtung der Bewegungsachsen für Werkzeug (dort Oszillationsachse Z) und Werkstück (dort Bewegungsachse X) verlaufen, und weist auf seiner Oberseite Lagerflächen für die Werkzeug- und Werkstückantriebe auf. Derartige kubische Maschinenbetten können jedoch unter hochdynamischen Belastungen nicht unerheblichen strukturellen Deformationen ausgesetzt sein, z.B. durch Biegung und Torsion des Maschinenbetts. Diese Deformationen können sich dann auf die oberhalb der kubischen Maschinenbettstruktur angeordneten Werkzeug- und Werkstückantriebe übertragen, so dass dort die Gefahr von unerwünschten Achsverlagerungen und Vibrationen besteht, die Rattermarken od.dgl. und letztendlich Ungenauigkeiten an den bearbeiteten Werkstücken zur Folge haben können.

Ferner beschäftigt sich die EP-A-0 849 038 mit einer "Hochgeschwindigkeitsdrehmaschine zum Herstellen optisch aktiver Oberflächen". Zur Struktur einer solchen Maschine ist diesem Stand der Technik unter Bezugnahme auf die "Abbildungen" 1 und 2 Folgendes zu entnehmen (Bezugszeichen weggelassen): "Der Maschinenkörper besteht aus einem unteren Maschinenbett, auf dem sich rechts und links zwei senkrechte Seitenteile aufbauen. In dem Maschinenbett ist die Werkstückspindel gelagert, die an ihrem oberen Ende eine Aufnahme für das Werkstück aufweist. Die Werkstückspindel wird von einem Elektromotor angetrieben und kann wahlweise kontinuierlich umlaufen oder sie kann durch Achsumschaltung in eine gesteuerte Rundachse (C-Achse) verwandelt werden. Die beiden Seitenteile tragen an ihrem oberen Ende zwei waagrechte, hintereinander liegende Führungsrohre, auf denen die Kugelumlaufführungen laufen. Diese ermöglichen die radiale Werkzeugbewegung (X-Achse) und tragen die Traverse. An der Traverse ist rechts und links je ein Führungsrohr befestigt und außerdem trägt es das Zwischenstück zur Aufnahme des Primärteils des Linearmotors mit den Statorwicklungen. Die Traverse ist außerdem mit einer Koppelstange verbunden, die die Verbindung zu einem konventionellen Vorschubantrieb herstellt. Mit diesem konventionellen Vorschubantrieb wird die radiale Werkzeugzustellung (in horizontaler Richtung) angetrieben (X-Achse). Auf den vertikalen Führungsrohren laufen rechts und links je zwei Kugelumlaufführungen, die ihrerseits den beweglichen Sekundärteil des Linearmotors tragen und damit die axiale Bewegung ermöglichen (Z-Achse). An dem Sekundärteil des Linearmotors ist der Werkzeugschlitten befestigt, der im dargestellten Beispiel drei Werkzeuge trägt. Das rechte Werkzeug dient zum Bearbeiten der Kontur des Werkstücks, während das linke Werkzeug zum Anarbeiten von Fasen am Werkstück dient. Das mittlere Werkzeug ist das Polierwerkzeug."

Schließlich offenbart die US-A-6 553 875 (siehe dort insbesondere die Fig. 6 und 7) eine Maschinenanordnung, die zwischen scheibenförmigen Endplatten einen Arbeitsraum aufweist. Von einer Endplatte erstreckt sich eine Werkstückspindel in den Arbeitsraum hinein. Der Werkstückspindel gegenüberliegend ist ein Werkzeugrevolver angeordnet, der seinerseits auf einer Kreuztischanordnung sitzt. Mittels des ersten Schlittens der Kreuztischanordnung kann der Werkzeugrevolver quer zur Werkstück-Drehachse bewegt werden, während der zweite Schlitten der Kreuztischanordnung dazu dient, den Werkzeugrevolver parallel zur Werkstück-Drehachse zu verschieben. Diese Bewegungsrichtungen "spannen" eine Bearbeitungsebene "auf", in der gemäß den genannten Figuren offenbar ein Eingriff zwischen Werkzeug und Werkstück stattfindet. In diesen Figuren ist ferner zu erkennen, dass der erste Schlitten mittels einer Schwalbenschwanzführung am zweiten Schlitten geführt ist, deren schräge Führungsflächen oberhalb und unterhalb der Bearbeitungsebene liegen. Ein den Arbeitsraum "umschließendes" Maschinengehäuse und ein Fast-Tool-Servo zur Erzeugung einer oszillierenden Zustellbewegung eines Drehwerkzeugs sind diesem Stand der Technik indes nicht zu entnehmen.

### AUFGABENSTELLUNG

Der Erfindung liegt die Aufgabe zugrunde, eine tunlichst leichte und kompakt bauende Maschine zur Bearbeitung von optischen Werkstücken, insbesondere von Kunststoff-Brillengläsern zu schaffen, die eine möglichst hohe statische und dynamische Steifigkeit aufweist und bei der unerwünschte Achsverlagerungen zwischen den Bewegungsachsen zuverlässig vermieden werden.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 14.

Eine erfindungsgemäße Maschine zur Bearbeitung von optischen Werkstücken, insbesondere von Kunststoff-Brillengläsern, hat ein Maschinengehäuse, das einen Arbeitsraum umschließt, der zwischen einer am Maschinengehäuse angeordneten Werkstückspindel, mittels der das Werkstück um eine Werkstück-Drehachse (B-Achse) drehend antreibbar ist, und einem am Maschinengehäuse angeordneten Fast-Tool-Servo zur Erzeugung einer oszillierenden Zustellbewegung (F-Achse) eines Drehwerkzeugs in Richtung des Werkstücks liegt, wobei für die Werkstückspindel ein antreibbarer, an wenigstens zwei Führungsflächen einer Führungsanordnung geführter Schlitten vorgesehen ist, mittels dessen zwischen Werkstück und Drehwerkzeug eine relative Vorschubbewegung (X-Achse) erzeugbar ist, die quer zur Zustellbewegung (F-Achse) verläuft und mit dieser eine Bearbeitungsebene (F-X-Ebene) definiert, in der bei der Bearbeitung ein Eingriff zwischen Drehwerkzeug und Werkstück stattfindet, wobei die Führungsanordnung derart am Maschinengehäuse angebracht ist, dass die Bearbeitungsebene (F-X-Ebene) zwischen den zwei Führungsflächen hindurch verläuft, und wobei der Schlitten im Querschnitt gesehen im Wesentlichen O-förmig ist und einen zentralen Aufnahmeraum für die Werkstückspindel aufweist.

Somit besitzt die erfindungsgemäße Maschine gleich in mehrfacher Hinsicht Symmetrien: Zunächst umgibt das (auch) die Funktionen eines Maschinenbetts übernehmende Maschinengehäuse den Arbeitsraum - und begrenzt bzw. bildet diesen zugleich - so dass sich zu beiden Seiten der Bearbeitungsebene ein Teil des Maschinengehäuses befindet. Sodann sind die Werkstückspindel und der Fast-Tool-Servo jeweils auf einer Seite des Arbeitsraums am Maschinengehäuse angeordnet, sind diesbezüglich also quasi spiegelsymmetrisch positioniert. Eine ähnliche Symmetrie besteht schließlich bei den Führungsflächen der Führungsanordnung für den Schlitten, die zu beiden Seiten der Bearbeitungsebene am Maschinengehäuse angeordnet sind.

In Summe ergibt sich eine strukturelle und thermische Symmetrie bezüglich mehrerer Ebenen, die nicht nur in einer sehr hohen Struktursteifigkeit der Maschine sondern auch in weitgehend gleichen Kraftleitungswegen und thermischen Wegen ausgehend vom Bearbeitungseingriff und den Wärmequellen, etwa den Antrieben der B-, F- und X-Achsen resultiert. Etwaige Wärmeverformungen im Schlitten und/oder im Maschinengehäuse führen dabei insbesondere aufgrund der erfindungsgemäßen Anordnung der Führungsflächen bezüglich der Bearbeitungsebene (F-X-Ebene) nicht zu einer Achsfluchtverlagerung des Werkzeugs (F-Achse) relativ zum. Werkstück (B-Achse) - siehe z.B. die Druckschrift EP-A-1 719 584 zu den hierdurch sonst möglichen Bearbeitungsfehlern (sogenannte "center features" bzw. Mittensingularitäten) - und zwar auch dann nicht, wenn sich der Fast-Tool-Servo und die Werkstückspindel unterschiedlich stark erwärmen. Entsprechendes gilt für dynamische Maschinenverformungen während der Bearbeitung, z.B. infolge einer Schwingungserregung des Maschinengehäuses durch das mit im Verhältnis hohen Frequenzen (beispielsweise 500 Hz) oszillierende Drehwerkzeug am Fast-Tool-Servo.

Eine einmal eingestellte Kalibrierung der Schneide des Drehwerkzeugs, das am Fast-Tool-Servo z.B. mittels eines Halters, wie in der Druckschrift EP-A-1 916 060 beschrieben, gehalten werden kann, bezüglich der Werkstück-Drehachse (B-Achse) der Werkstückspindel bleibt somit selbst bei einer Maschinenerwärmung erhalten. Dies ermöglicht in vorteilhafter Weise auch den Einsatz von Werkzeughaltern in der Maschine, bei denen die Lage der Werkzeugschneide außerhalb der Maschine voreingestellt wurde - eine hinreichend präzise Schnittstelle zwischen Werkzeughalter und Fast-Tool-Servo vorausgesetzt.

Weitere Vorteile der erfindungsgemäßen Maschinenausgestaltung bestehen darin, dass - verglichen zum eingangs geschilderten Stand der Technik - infolge der hohen Struktursteifigkeit auch die Wandstärken des Maschinengehäuses im Sinne eines Leichtbaus reduziert werden können und/oder andere, leichtere Materialien für das Maschinengehäuse zum Einsatz kommen können, so dass die Maschine insgesamt leichter ist. So kann - neben natürlich einem kostengünstigen Grauguss - auch eine Leichtmetall-, insbesondere eine Aluminiumlegierung für das Maschinengehäuse verwendet werden, die aufgrund ihrer guten Wärmeleitfähigkeit für eine rasche Weiterleitung der Wärme sorgt, wodurch sich schnell eine stabile Maschinenbetriebstemperatur einstellen kann. Der ansonsten nachteilige, verhältnismäßig hohe Wärmeausdehnungskoeffizient einer solchen Legierung hat infolge der erfindungsgemäßen Maschinenausgestaltung keinen negativen Einfluss auf die Maschinenkalibrierung.

Dabei ist der Schlitten wie gesagt im Querschnitt gesehen im Wesentlichen O-förmig und weist einen zentralen Aufnahmeraum für die Werkstückspindel auf. Ein solcher Schlitten baut nicht nur sehr kompakt, sondern besitzt bei geschlossenem Kraftfluss auch eine sehr hohe Steifigkeit sowie erneut ein symmetrisches Wärmedehnungsverhalten.

Es ist weiterhin bevorzugt, wenn zum Antrieb des Schlittens ein Linearmotor vorgesehen ist, der ein Primärteil mit Spulen und ein Sekundärteil mit Magnetplatten aufweist, wobei der Primärteil in Langstatorausführung am Maschinengehäuse befestigt ist, während der Sekundärteil am Schlitten angebracht ist. Zunächst ist ein solcher Linearmotor preisgünstig und problemlos im Handel verfügbar. Außerdem hat die bevorzugte Anordnung von Primärteil und Sekundärteil Vorteile dahingehend, dass die vom Primärteil erzeugte Wärme über das Maschinengehäuse abgeführt werden kann, so dass eine Kühlung des Linearmotors ggf. entbehrlich ist, und dass die Versorgungsleitungen für den Linearmotor nicht vom Schlitten mitgeschleppt werden müssen, was gegenüber einer - prinzipiell ebenfalls möglichen - umgekehrten Anordnung nicht nur den mechanischen Aufwand verringert sondern auch für eine geringere Masse der bewegten Bauteile und damit ein besseres Beschleunigungsverhalten sorgt.

Für die Führungsanordnung für den Schlitten sind verschiedene Ausgestaltungen denkbar, solange sie mindestens zwei aktive Führungsflächen aufweist, die wie oben angegeben bezüglich der Bearbeitungsebene (F-X-Ebene) positioniert werden können. So kann es sich beispielsweise um eine Stangenführung mit zwei zylindrischen Führungsstangen handeln, die sich durch den Schlitten hindurch erstrecken, wobei jede Führungsstange mit ihrer Außenumfangsfläche eine Führungsfläche bildet, die mit zugeordneten Kugelbuchsen im Schlitten zusammenwirkt. Ebenfalls möglich wäre z.B. eine Führungsanordnung mit nur einer verhältnismäßig breiten Führungsschiene, die auf gegenüberliegenden Längsseiten angeordnete Führungsnuten hat, welche jeweils wenigstens eine der geforderten Führungsflächen ausbilden, die mit zugeordneten Lagerelementen zusammenwirken. Eine solche Führungsschiene könnte auch mit einer Öffnung für den Durchtritt der Werkstückspindel versehen am Schlitten angebracht sein, so dass sich die Führungsflächen schlittenseitig befinden, während die zugeordneten Lagerelemente am Maschinengehäuse montiert sind. Derzeit bevorzugt ist indes eine Führungsanordnung mit zwei am Maschinengehäuse angebrachten Führungsschienen, die jeweils wenigstens eine der Führungsflächen ausbilden, und wenigstens zwei, vorzugsweise vier am Schlitten befestigten Führungsschuhen, die jeweils bzw. paarweise einer Führungsschiene zugeordnet sind. Derartige Linearführungen bieten bei kleinem Bauraumbedarf hohe Tragzahlen, sind einfach zu montieren und problemlos im Handel erhältlich, z.B. als Typ SGL-HYF von der Firma NB Nippon Bearing, Japan. Eine weitere Alternative sind Linearführungen vom Typ M/V der Firma Schneeberger, Schweiz.

Es ist ferner bevorzugt, wenn in Richtung einer Mittelachse des Maschinengehäuses gesehen eine dieser Führungsschienen axial auf Höhe des Linearmotors angeordnet ist, so dass sie in vorteilhafter Weise dessen Magnetkräfte aufzunehmen vermag, ohne dass größere Torsionsmomente auf die Führungsanordnung wirken, und/oder wenn die andere Führungsschiene auf einer vom Arbeitsraum abgewandten Seite des Linearmotors angeordnet ist, was einem kleinen Querschnitt des Maschinengehäuses senkrecht zu dessen Mittelachse förderlich ist.

Im weiteren Verfolg des Erfindungsgedankens kann der Fast-Tool-Servo auf beiden Seiten der Bearbeitungsebene (F-X-Ebene) über Befestigungsmittel wärmeleitend mit dem Maschinengehäuse verbunden und statisch verklemmt sein. Dies hat den Vorteil, dass die statischen Befestigungskräfte und dynamische Kräfte bei der Werkstückbearbeitung sowie Wärme gleichermaßen auf beiden Seiten der Bearbeitungsebene (F-X-Ebene) ein- und weggeleitet werden bzw. wirken, so dass sich deren Effekte bezüglich der Bearbeitungsebene gegenseitig kompensieren.

Grundsätzlich sind verschiedene Querschnittsformen für das Maschinengehäuse möglich, ohne den Erfindungsgedanken zu verlassen, z.B. quadratische, rechteckige, ovale, hexagonale oder polygonale Querschnitte. Insbesondere im Hinblick auf einen guten Späneabfluss und eine leichte Reinigbarkeit bevorzugt ist es jedoch, wenn der vom Maschinengehäuse begrenzte Arbeitsraum in einem Schnitt senkrecht zur Mittelachse des Maschinengehäuses gesehen einen im Wesentlichen kreisrunden Querschnitt (zylindrische Begrenzungsfläche, insgesamt tonnenförmige Ausgestaltung) aufweist.

Weiterhin kann das Maschinengehäuse einen werkstückseitigen Gehäuseabschnitt und einen werkzeugseitigen Gehäuseabschnitt aufweisen, die einteilig oder als separate, direkt oder indirekt miteinander verbundene Teile ausgebildet sind. Während mit einer einteiligen Gehäuseausbildung Passungen, Dichtungen, etc. vermieden werden, die bei einer mehrteiligen Gehäuseausbildung in der Regel an den Verbindungsstellen der Gehäuseteile vorzusehen sind, gestaltet sich die Bearbeitung eines einteiligen Gehäuses im Innenbereich relativ schwierig. Insofern ist gegenwärtig eine zweiteilige Gehäuseausbildung bevorzugt, bei der zwei Gehäuseteile direkt miteinander verbunden werden, was eine einfache Bearbeitbarkeit auch im Innenbereich gewährleistet. Möglich ist indes auch eine mehrteilige Gehäuseausbildung mit mehr als zwei Teilen, z.B. eine dreiteilige Gehäuseausbildung mit dem werkstückseitigen Gehäuseabschnitt als einem ersten Teil, dem werkzeugseitigen Gehäuseabschnitt als einem zweiten Teil und einem z.B. rohrförmigen, den Arbeitsraum nach radial außen begrenzenden Abschnitt als einem dritten Teil, in welches die ersten und zweiten Teile auf gegenüberliegenden Seiten eingesteckt werden, um Letztere indirekt zu verbinden.

Im Hinblick auf eine sehr hohe Steifigkeit, ein geringes Gewicht und kompakte Abmaße ist es ferner bevorzugt, wenn der werkzeugseitige Gehäuseabschnitt - ähnlich einem Speichenrad - einen rohrförmigen, im Wesentlichen hohlzylindrischen Innenabschnitt (Nabe) zur Aufnahme des Fast-Tool-Servos und einen den Innenabschnitt umgebenden, rohrförmigen, im Wesentlichen hohlzylindrischen Außenabschnitt (Felge) aufweist, die über speichenartig verlaufende Stege (Speichen) miteinander verbunden sind.

Was den werkstückseitigen Gehäuseabschnitt angeht, kann dieser vorzugsweise einen rohrförmigen, im Wesentlichen hohlzylindrischen Außenabschnitt aufweisen, der zwei im Wesentlichen parallel zueinander und zur Mittelachse des Maschinengehäuses angeordnete, im Wesentlichen quaderförmige Wandabschnitte umgibt, die sich bis zu einer Innenumfangsfläche des Außenabschnitts erstrecken und zwischen sich einen Aufnahmeraum für den Schlitten und dessen Antrieb begrenzen. Diese Ausgestaltung begünstigt wiederum eine symmetrische Kraft- und Wärmeübertragung bzw. -ableitung und baut darüber hinaus sehr kompakt.

In vorteilhafter Weiterbildung können hierbei die im Wesentlichen quaderförmigen Wandabschnitte jeweils eine Innenfläche - von denen z.B. eine als Auflagerfläche für den Primärteil des Linearmotors nutzbar ist - und eine Außenfläche aufweisen, die im Wesentlichen parallel zur Mittelachse des Maschinengehäuses verlaufen und in Richtung des Arbeitsraums an eine den Arbeitsraum begrenzende Wandscheibe anschließen, welche im Wesentlichen senkrecht zur Mittelachse des Maschinengehäuses verläuft und sich ringsum bis zu der Innenumfangsfläche des Außenabschnitts erstreckt. Auch diese Weiterbildung ist einer symmetrischen Kraft- und Wärmeableitung bzw. -übertragung förderlich.

Im Hinblick auf eine sehr steife Anbindung der Führungsanordnung an das Maschinengehäuse ist es hierbei bevorzugt, wenn die im Wesentlichen quaderförmigen Wandabschnitte mit ihren vom Arbeitsraum abgewandten Stirnseiten auf beiden Seiten der Bearbeitungsebene (F-X-Ebene) jeweils eine Lagerfläche für die Führungsanordnung ausbilden, so dass der Führungsanordnung große Querschnitte mit hohen Widerstandsmomenten insbesondere gegen Biegung unterlagert sind.

Vorzugsweise ist das Maschinengehäuse ferner neben dem Fast-Tool-Servo mit einer Aussparung zur Aufnahme einer Frässpindel versehen. Mit einem an der Frässpindel montierten, in den Arbeitsraum vorstehenden Fräswerkzeug kann somit in ein und derselben Maschine auch ein Vorranden (sogenanntes "Cribbing" bei Brillengläsern), ggf. sogar ein Fertigranden von Brillengläsern auf Gestellform erfolgen. Ggf. kann die Frässpindel in ihrer Aufnahme im Maschinengehäuse auch längsverschieblich angeordnet sein, wodurch z.B. Fasen am Werkstück ausgebildet werden können.

Des Weiteren ist es auch möglich, die Ausgestaltung so zu treffen, dass die Werkstückspindel bezüglich des Schlittens in Richtung der Werkstück-Drehachse (B-Achse) längsverschieblich ist (Y-Achse). Hiermit ergeben sich in vorteilhafter Weise weitere Bearbeitungs- und/oder Kalibriermöglichkeiten an der Maschine. Zum einen kann - bei geeigneter Winkelstellung der erwähnten Frässpindel bezüglich der Bearbeitungsebene (F-X-Ebene) - auch eine fräsende Bearbeitung der Stirnfläche des an der Werkstückspindel gehaltenen Werkstücks erfolgen, wie in der Druckschrift EP-A-0 758 571 beschrieben, auf die an dieser Stelle diesbezüglich ausdrücklich verwiesen sei. Was die erweiterten Kalibriermöglichkeiten angeht, kann schließlich - bei geeigneter Winkelstellung der Werkstück-Drehachse (B-Achse) bezüglich der Bearbeitungsebene (F-X-Ebene), wie in der Druckschrift EP-A-1 719 585 beschrieben (dort Anstellwinkel α) - eine hochgenaue automatische Ausrichtung des Arbeitspunkts der Schneidkante des Drehwerkzeugs auf die Werkstück-Drehachse (B-Achse) der Werkstückspindel erfolgen, wie auch in der Druckschrift EP-A-1 719 584 im Einzelnen erläutert; bezüglich dieser Kalibrierung wird hiermit ebenfalls ausdrücklich auf die erwähnten Druckschriften Bezug genommen.

### KURZE BESCHREIBUNG DER ZEICHNUNGEN

Im Folgenden wird die Erfindung anhand bevorzugter Ausführungsbeispiele unter Bezugnahme auf die beigefügten, teilweise vereinfachten bzw. schematischen Zeichnungen näher erläutert. In den Zeichnungen zeigen:
- Fig. 1: eine abgebrochene und teilweise aufgebrochene perspektivische Ansicht einer Maschine zur Bearbeitung von optischen Werkstücken, namentlich Kunststoff-Brillengläsern nach einem ersten Ausführungsbeispiel der Erfindung von schräg oben / vorne rechts, mit geöffneter Schwenktür für einen Zugang zum Arbeitsraum;
- Fig. 2: eine im Maßstab gegenüber der Fig. 1 vergrößerte, perspektivische Ansicht der Maschine gemäß Fig. 1 von schräg oben / hinten rechts, mit geschlossener Schwenktür, wobei gegenüber der Fig. 1 zudem ein Maschinengestell und Verkleidungsteile weggelassen wurden, um den Blick in das Innere der Maschine freizugeben;
- Fig. 3: eine abgebrochene Seitenansicht der Maschine gemäß Fig. 1 von rechts in Fig. 1, ohne Verkleidungsteile aber mit Maschinengestell sowie geschlossener Schwenktür;
- Fig. 4: eine abgebrochene Vorderansicht der Maschine gemäß Fig. 1 mit den Vereinfachungen der Fig. 3, dieser gegenüber aber geöffneter Schwenktür;
- Fig. 5: eine abgebrochene Schnittansicht der Maschine gemäß Fig. 1 entsprechend der Schnittverlaufslinie V-V in Fig. 3;
- Fig. 6: eine Schnittansicht der Maschine gemäß Fig. 1 entsprechend der Schnittverlaufslinie VI-VI in Fig. 3;
- Fig. 7: eine vergrößerte Darstellung des die Schwenktür betreffenden Details VII in Fig. 6;
- Fig. 8: eine abgebrochene Schnittansicht der Maschine gemäß Fig. 1 entsprechend der Schnittverlaufslinie VIII-VIII in Fig. 4, aber mit geschlossener Schwenktür;
- Fig. 9: eine perspektivische Ansicht eines Maschinengehäuses der Maschine gemäß Fig. 1 von schräg oben / hinten links (Werkzeugseite);
- Fig. 10: eine perspektivische Ansicht des bereits in Fig. 9 gezeigten Maschinengehäuses der Maschine gemäß Fig. 1 von schräg oben / vorne links (Werkstückseite); und
- Fig. 11: eine abgebrochene Längsschnittansicht einer Maschine zur Bearbeitung von optischen Werkstücken, namentlich Kunststoff-Brillengläsern nach einem zweiten Ausführungsbeispiel der Erfindung.

In den Zeichnungen wurden zur Vereinfachung der Darstellung neben Teilen der Verkleidung insbesondere auch die Bedieneinheit und Steuerung, Scheiben, Ablagen für Werkstücke und Werkzeuge, die Versorgungseinrichtungen (einschließlich Leitungen, Schläuche und Rohre) für Strom, Druckluft und Kühlmittel, der Kühlmittelrücklauf sowie die Mess-, Wartungs- und Sicherheitseinrichtungen zumeist weggelassen, weil sie für das Verständnis der Erfindung nicht erforderlich sind.

### DETAILLIERTE BESCHREIBUNG DER AUSFÜHRUNGSBEISPIELE

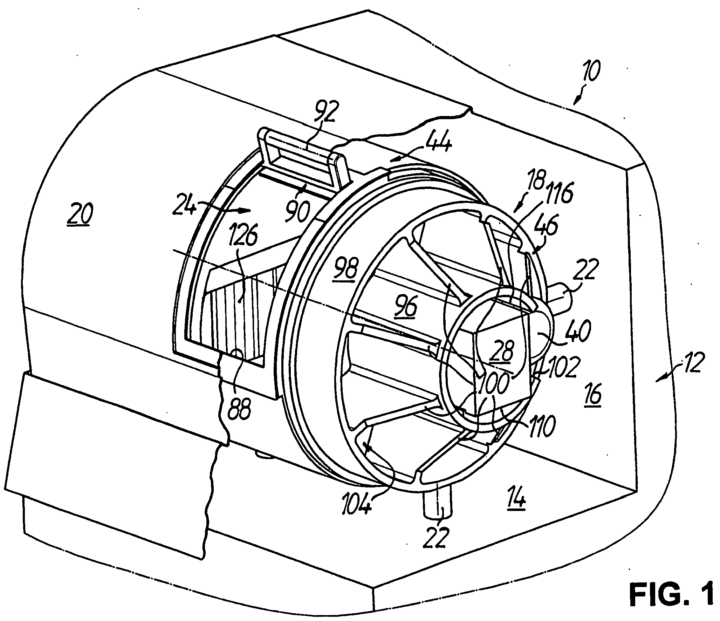

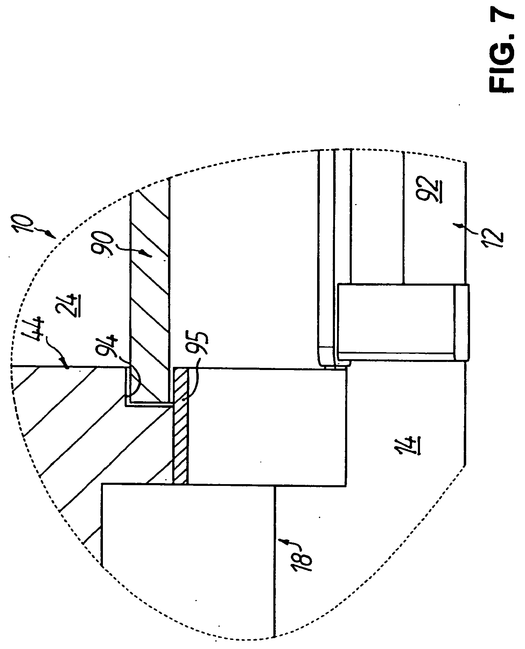

In den Fig. 1 bis 8 ist eine CNC-geregelte Maschine insbesondere zur stirnseitigen Flächenbearbeitung von Brillengläsern L aus Kunststoff mit 10 beziffert. Die Maschine 10 weist ein in den Fig. 1, 3 bis 6 und 8 nur schematisch und abgebrochen dargestelltes Maschinengestell 12 auf, das als Schweißkonstruktion aus Blechen ausgebildet sein kann, mit einer horizontal verlaufenden Oberseite 14 und einer vertikal verlaufenden Rückwand 16, die nach unten und hinten einen im Querschnitt gesehen im Wesentlichen L-förmigen Aufnahmeraum für ein nachfolgend noch ausführlich beschriebenes Maschinengehäuse 18 begrenzen. Nach vorne, oben und zu den Seiten ist der Aufnahmeraum für das Maschinengehäuse 18 von einer vom Maschinengestell 12 abnehmbaren, z.T. durchsichtigen Verkleidung 20 begrenzt, die in Fig. 1 ebenfalls nur schematisch und abgebrochen dargestellt ist. Im bzw. am Maschinengestell 12 sind insbesondere eine Maschinensteuerung, eine Bedieneinheit, Versorgungseinrichtungen für Strom, Druckluft und Kühlmittel sowie eine Einrichtung für den Kühlmittelrücklauf angeordnet, die in den Figuren nicht gezeigt sind. Wie schon die Fig. 1 erkennen lässt und nachfolgend noch ausführlicher beschrieben wird ist das im Wesentlichen tonnenförmige Maschinengehäuse 18 über eine Mehrzahl von schwingungsabsorbierenden Elementen, hier Gummi-Metall-Pufferelementen 22 elastisch am Maschinengestell 12 gelagert.

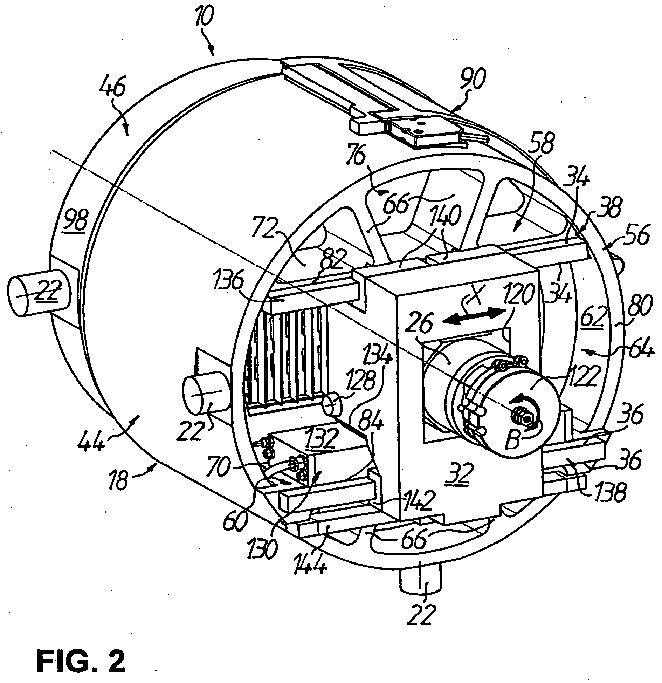

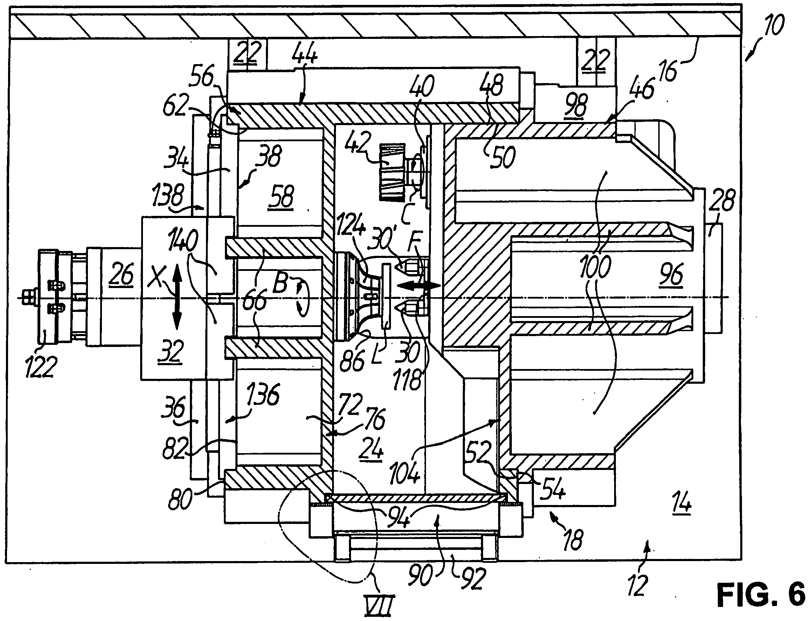

Das einen Arbeitsraum 24 umschließende bzw. umgebende Maschinengehäuse 18 nimmt allgemein die folgenden Bauteile und -gruppen auf, wie insbesondere die Fig. 1, 2, 5 und 6 erkennen lassen: Auf einer ersten Seite des Arbeitsraums 24 (i) eine Werkstückspindel 26, mittels der das Brillenglas L um eine Werkstück-Drehachse B drehend antreibbar ist, und auf einer der ersten Seite gegenüberliegenden, zweiten Seite des Arbeitsraums 24 (ii) einen Fast-Tool-Servo 28 zur Erzeugung einer oszillierenden Zustellbewegung eines Drehwerkzeugs bzw. -meißels 30 oder Gravierwerkzeugs 30' (siehe Fig. 6) entlang einer hier linear verlaufenden F-Achse in Richtung des Brillenglases L. Darüber hinaus ist im dargestellten Ausführungsbeispiel die Werkstückspindel 26 in (iii) einem antreibbaren Schlitten 32 aufgenommen, mittels dessen zwischen dem Brillenglas L und dem Drehwerkzeug 30 eine Vorschubbewegung entlang einer linear verlaufenden X-Achse erzeugt werden kann, die quer zur Zustellbewegung (F-Achse) verläuft. Dazu ist der Schlitten 32 an wenigstens zwei - in den Fig. 2 und 4 bis 6 nur schematisch angedeuteten, weil von Führungstyp zu Führungstyp (vgl. die einleitend erwähnten Beispiele hierzu) verschiedenen - Führungsflächen 34, 36 einer am Maschinengehäuse 18 angebrachten Führungsanordnung 38 geführt. Außerdem ist bei dem dargestellten Ausführungsbeispiel auf der zweiten Seite des Arbeitsraums 24 neben dem Fast-Tool-Servo 28 noch (iv) eine Frässpindel 40 angeordnet, die in den Arbeitsraum 24 vorragend ein Fräswerkzeug 42 trägt, welches mittels der Frässpindel 40 um eine Werkzeug-Drehachse C drehend antreibbar ist, während das Brillenglas L geeignet in den B-und X-Achsen rotiert bzw. bewegt wird, insbesondere um den Rand des Brillenglases L in an sich bekannter Weise vorzuranden (sogenanntes "Cribbing").

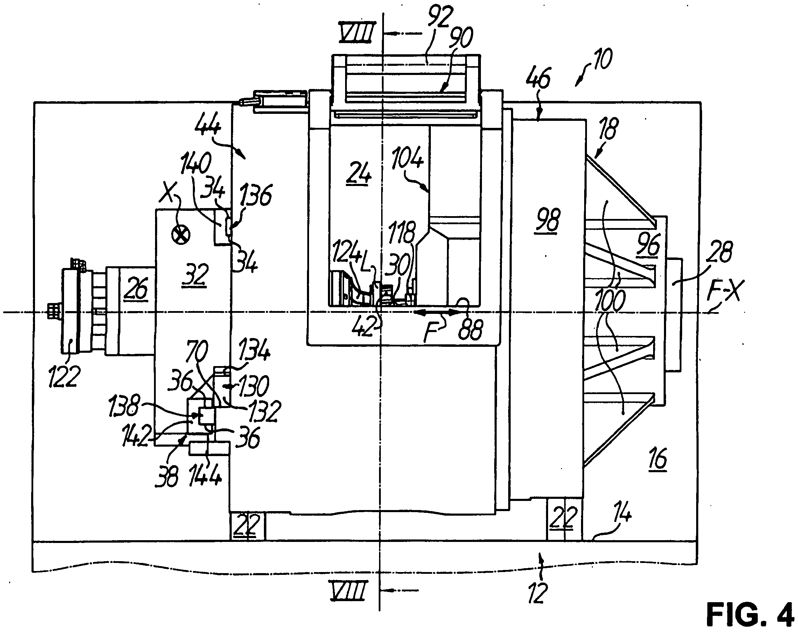

Insoweit definieren die Zustellbewegung (F-Achse) am Fast-Tool-Servo 28 und die über den Schlitten 32 bewirkte Vorschubbewegung (X-Achse) an der Werkstückspindel 26 eine in den Fig. 4, 5 und 8 mit strichpunktierter Linie angedeutete Bearbeitungsebene F-X, in der bei der Frontflächenbearbeitung des Brillenglases L ein im Wesentlichen punktförmiger, spanabhebender Eingriff zwischen dem Drehwerkzeug 30 und dem Brillenglas L stattfindet, welches zugleich vermittels der Werkstückspindel 26 um die Werkstück-Drehachse B unter Erzeugung einer Schnittkraft drehend angetrieben wird, so dass am Brillenglas L die gewünschte Flächenform entsteht. Wie nachfolgend noch näher beschrieben werden wird ist es wichtig, dass die Führungsanordnung 38 derart am Maschinengehäuse 18 angebracht ist, dass diese Bearbeitungsebene F-X zwischen den erwähnten Führungsflächen 34, 36 hindurch verläuft, so dass sich (wenigstens) eine lasttragende Führungsfläche 34 auf einer Seite, z.B. oberhalb der Bearbeitungsebene F-X befindet, während sich (wenigstens) eine weitere lasttragende Führungsfläche 36 auf einer anderen Seite, beispielsweise unterhalb der Bearbeitungsebene F-X befindet.

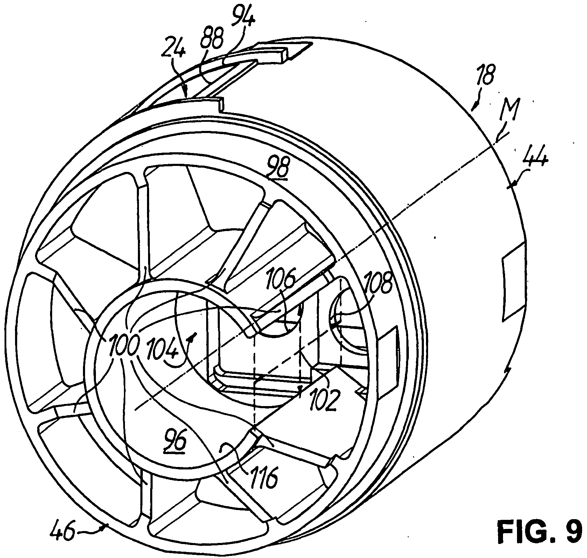

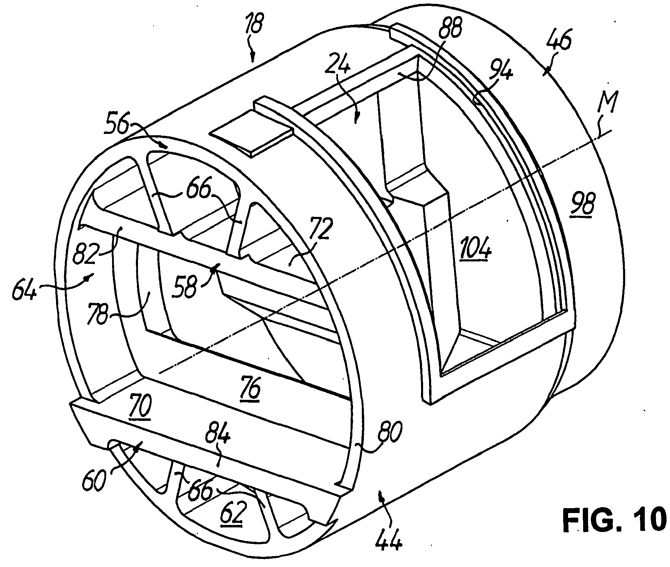

Bevor die oben erwähnten, die Kinematik und Bearbeitungsmöglichkeiten der Maschine 10 bestimmenden Bauteile und -gruppen sowie deren Anordnung und Befestigung im Maschinengehäuse 18 näher erläutert werden, soll Letzteres insbesondere unter Bezugnahme auf die Fig. 9 und 10 ausführlicher beschrieben werden.

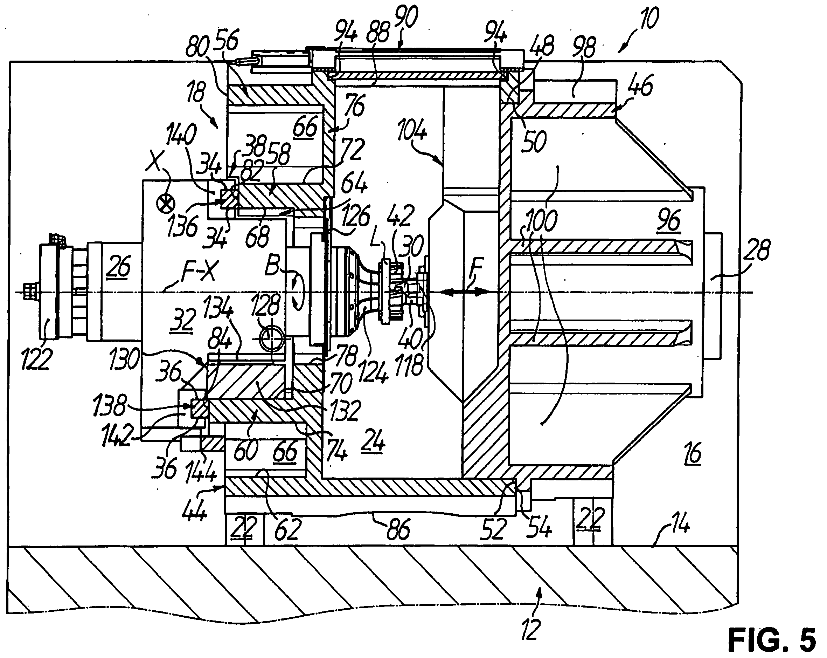

Das im dargestellten Ausführungsbeispiel aus einer Leichtmetall-, vorzugsweise einer Aluminiumlegierung bestehende, im Wesentlichen rotationssymmetrische Maschinengehäuse 18 besteht aus zwei Teilen, nämlich einem werkstückseitigen Gehäuseabschnitt 44 und einem werkzeugseitigen Gehäuseabschnitt 46, die direkt miteinander verbunden sind. Hierfür besitzt der werkzeugseitige Gehäuseabschnitt 46 gemäß den Fig. 5 und 6 auf seiner dem Arbeitsraum 24 zugewandten Seite außenumfangsseitig eine umlaufende Flanschfläche 48, auf die der werkstückseitige Gehäuseabschnitt 44 mit einer innenumfangsseitig vorgesehenen, umlaufenden Anschlussfläche 50 formschlüssig zentrierend aufgeschoben ist. Die axiale Relativposition der Gehäuseabschnitte 44, 46 wird dabei durch eine ringförmige Anschlagsfläche 52 am werkzeugseitigen Gehäuseabschnitt 46 bestimmt, an der der werkstückseitige Gehäuseabschnitt 44 mit einer ringförmigen Stirnfläche 54 anliegt. In diesem Verbindungsbereich sind die Gehäuseabschnitte 44, 46 miteinander verschraubt, was aus Gründen der Zeichnungsvereinfachung nicht gezeigt ist.

Der werkstückseitige Gehäuseabschnitt 44 des Maschinengehäuses 18 weist einen rohrförmigen, im Wesentlichen hohlzylindrischen Außenabschnitt 56 auf, an dem die Anschlussfläche 50 ausgebildet ist. Der Außenabschnitt 56 umgibt zwei im Wesentlichen parallel zueinander und zur Mittelachse M des Maschinengehäuses 18 angeordnete, im Wesentlichen quaderförmige Wandabschnitte 58, 60. Letztere erstrecken sich gemäß Fig. 10 bis zu einer Innenumfangsfläche 62 des Außenabschnitts 56 und begrenzen zwischen sich einen Aufnahmeraum 64 für den Schlitten 32. Auf einer vom Aufnahmeraum 64 abgewandten Seite ist jeder quaderförmige Wandabschnitt 58, 60 mithilfe von zwei Rippen 66 gegenüber dem Außenabschnitt 56 abgestützt. Die Rippen 66 erstrecken sich hierbei im Wesentlichen über die gesamte Breite der quaderförmigen Wandabschnitte 58, 60 sowie von diesen bis zur Innenumfangsfläche 62 des Außenabschnitts 56 und verlaufen dabei bezogen auf die Mittelachse M des Maschinengehäuses 18 im Wesentlichen in radialer Richtung.

Wie insbesondere in den Fig. 5 und 10 zu erkennen ist weisen die quaderförmigen Wandabschnitte 58, 60 jeweils eine Innenfläche 68, 70 und eine Außenfläche 72, 74 auf, die im Wesentlichen parallel zur Mittelachse M des Maschinengehäuses 18 verlaufen und in Richtung des Arbeitsraums 24 an eine den Arbeitsraum 24 begrenzende Wandscheibe 76 anschließen. Die Wandscheibe 76 verläuft im Wesentlichen senkrecht zur Mittelachse M des Maschinengehäuses 18 und erstreckt sich ringsum bis zu der Innenumfangsfläche 62 des Außenabschnitts 56. Zwischen den quaderförmigen Wandabschnitten 58, 60 besitzt die Wandscheibe 76 gemäß Fig. 5 eine dickere Wandstärke und ist dort mit einer länglichen, in einer Draufsicht gesehen im Wesentlichen rechteckigen Aussparung 78 für den Durchtritt der Werkstückspindel 26 versehen.

Wie am besten die Fig. 5 und 10 zeigen steht, vom Arbeitsraum 24 kommend in Richtung der Mittelachse M des Maschinengehäuses 18 gesehen, der hier obere quaderförmige Wandabschnitt 58 gegenüber einer Stirnfläche 80 am Außenabschnitt 56 des werkstückseitigen Gehäuseabschnitts 44 axial etwas zurück, während der hier untere quaderförmige Wandabschnitt 60 gegenüber der Stirnfläche 80 axial etwas übersteht. An ihren vom Arbeitsraum 24 abgewandten Stirnseiten bilden die quaderförmigen Wandabschnitte 58, 60 auf beiden Seiten der Bearbeitungsebene F-X jeweils eine Lagerfläche 82, 84 für die Führungsanordnung 38 aus. Aufgrund der oben angesprochenen, unterschiedlichen Längen der quaderförmigen Wandabschnitte 58, 60 in Richtung der Mittelachse M des Maschinengehäuses 18 befindet sich die Lagerfläche 82 an dem hier oberen quaderförmigen Wandabschnitt 58 axial über der Innenfläche 70 des hier unteren quaderförmigen Wandabschnitts 60.

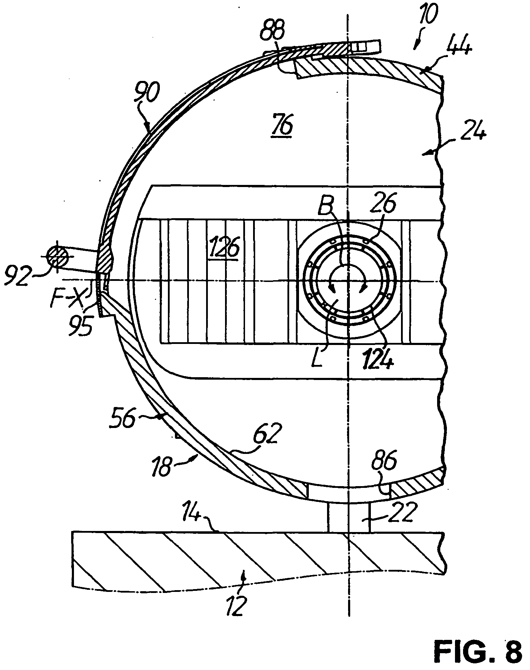

Gemäß insbesondere Fig. 8 weist der vom Maschinengehäuse 18, genauer der Innenumfangsfläche 62 des Außenabschnitts 56 des werkstückseitigen Gehäuseabschnitts 44 begrenzte Arbeitsraum 24 in einem Schnitt senkrecht zur Mittelachse M des Maschinengehäuses 18 gesehen einen im Wesentlichen kreisrunden Querschnitt auf. In einem Bodenbereich des Arbeitsraums 24 ist der Außenabschnitt 56 des Maschinengehäuses 18 mit einer im Wesentlichen ovalen (siehe auch Fig. 6) Abflussöffnung 86 für die Kühlmittel- und Späneentsorgung versehen, durch die Späne und Kühlmittel in einen unterhalb des Maschinengehäuses 18 im Maschinengestell 12 angeordneten Kühlmittelbehälter (nicht gezeigt) ablaufen können.

Nach vorne, d.h. zu einer Bedienerposition hin ist der Arbeitsraum 24 über ca. ein Viertel des Zylinderumfangs des Außenabschnitts 56 mit einer in einer Abwicklung gesehen rechteckigen Zugangsöffnung 88 versehen, die wahlweise mittels einer manuell betätigbaren Schwenktür 90 abgedeckt werden kann. Die vorzugsweise wenigstens teilweise durchsichtige, mit einem Handgriff 92 versehene Schwenktür 90 ist hierbei genauso gekrümmt wie das Maschinengehäuse 18 und in am Außenumfang des Außenabschnitts 56 zu beiden Seiten der Zugangsöffnung 88 ausgebildeten Führungsbahnen 94 geführt, die mittels streifenförmiger Blechabdeckungen 95 verschlossen sind, welche mit dem Maschinengehäuse 18 verschraubt sind.

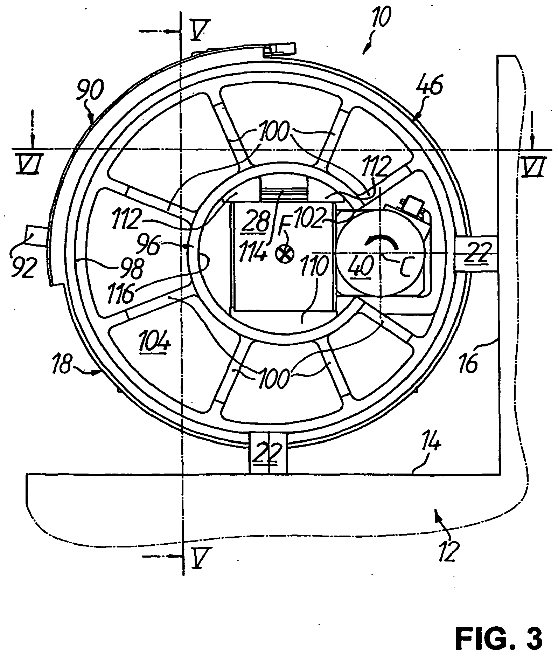

Weitere Details des werkzeugseitigen Gehäuseabschnitts 46 des Maschinengehäuses 18 sind insbesondere den Fig. 1, 3 bis 6 und 9 zu entnehmen. Demgemäß weist der werkzeugseitige Gehäuseabschnitt 46 einen rohrförmigen, im Wesentlichen hohlzylindrischen Innenabschnitt 96 zur Aufnahme des Fast-Tool-Servos 28 und einen den Innenabschnitt 96 umgebenden, rohrförmigen, im Wesentlichen hohlzylindrischen Außenabschnitt 98 auf, die über speichenartig verlaufende Stege 100 miteinander verbunden sind. Wie in Fig. 3 zu sehen ist ist der Innenabschnitt 96 hierbei etwas exzentrisch versetzt zum Außenabschnitt 98 und damit zur Mittelachse M des Maschinengehäuses 18 angeordnet. Die Stege 100 - im dargestellten Ausführungsbeispiel acht an der Zahl - verlaufen im Hinblick auf eine Steganzahl von neun im Wesentlichen gleichmäßig winkelbeabstandet über den Umfang verteilt in etwa radial zur Bewegungsrichtung des Drehwerkzeugs 30, d.h. zur F-Achse des Fast-Tool-Servos 28. Zu einer in den Fig. 3 und 9 rechten Seite hin ist der Innenabschnitt 96 mit einer Aussparung 102 versehen, um im Maschinengehäuse 18 einen Raum zur Aufnahme der Frässpindel 40 neben dem Fast-Tool-Servo 28 zu schaffen. In diesem Raum "fehlt" der bei der Umfangsverteilung der Stege 100 berücksichtigte "neunte" Steg.

Vom Arbeitsraum 24 kommend entlang der Mittelachse M des Maschinengehäuses 18 gesehen ist der Innenabschnitt 96 länger als der Außenabschnitt 98 ausgebildet. Die Stege 100 sind hierbei so geformt und abgeschrägt, dass sie sich im Wesentlichen über die gesamte Länge sowohl des Innenabschnitts 96 als auch des Außenabschnitts 98 erstrecken. Zum Arbeitsraum 24 hin entlang der Mittelachse M des Maschinengehäuses 18 gesehen enden die Stege 100 an einem mehrfach gestuften Abschlusswandbereich 104 des werkzeugseitigen Gehäuseabschnitts 46. Der Abschlusswandbereich 104 ist gemäß Fig. 9 mit einer Durchtrittsöffnung 106 für die am Fast-Tool-Servo 28 gehaltenen Werkzeuge und daneben mit einer weiteren Durchtrittsöffnung 108 für die Frässpindel 40 versehen, verschließt ansonsten aber die aus Innenabschnitt 96, Außenabschnitt 98 und Stegen 100 gebildete Struktur zum Arbeitsraum 24 hin.

An bzw. in dem insoweit beschriebenen Maschinengehäuse 18 sind insbesondere die eingangs schon erwähnten Bauteile und -gruppen nun wie folgt montiert. Zunächst ist werkzeugseitig die in der Aussparung 102 des Maschinengehäuses 18 aufgenommene Frässpindel 40 auf nicht näher gezeigte Weise am Abschlusswandbereich 104 des werkzeugseitigen Gehäuseabschnitts 46 angeflanscht, wobei sie die Durchtrittsöffnung 108 im Abschlusswandbereich 104 (siehe Fig. 9) geeignet abgedichtet durchgreift, so dass sie in den Arbeitsraum 24 hineinragt, wie insbesondere in Fig. 6 zu sehen ist. Mittels der Frässpindel 40 ist das daran montierte Fräswerkzeug 42 in der Drehzahl gesteuert um die Werkzeug-Drehachse C drehend antreibbar, die im dargestellten Ausführungsbeispiel mit der F-Achse des Fast-Tool-Servos 28 und der X-Achse der Werkstückspindel 26 in einer Ebene liegt.

Der im Innenabschnitt 96 des werkzeugseitigen Gehäuseabschnitts 46 aufgenommene Fast-Tool-Servo 28 ist auf beiden Seiten der Bearbeitungsebene F-X über Befestigungsmittel wärmeleitend mit dem Maschinengehäuse 18 verbunden und statisch verklemmt. Genauer gesagt ist der Fast-Tool-Servo 28 gemäß Fig. 3 unten auf einer metallischen Grundplatte 110 montiert, die ihrerseits am Innenabschnitt 96 des Maschinengehäuses 18 befestigt ist. Auf dem im Querschnitt gesehen im Wesentlichen quadratischen Fast-Tool-Servo 28 sind zwei metallische Zylindersegmentklötze 112 angeordnet, die mittels einer dazwischen liegenden Spannschraube 114 zu beiden Seiten auseinandergespannt und somit gegen eine Innenumfangsfläche 116 des Innenabschnitts 96 gepresst werden können. Es ist ersichtlich, dass die Zylindersegmentklötze 112 dabei zugleich den Fast-Tool-Servo 28 nach unten gegen die Grundplatte 110 drücken. Im Ergebnis ist der Fast-Tool-Servo 28 nicht nur sehr steif im Maschinengehäuse 18 verspannt, sondern auch derart befestigt, dass die im/vom Fast-Tool-Servo 28 erzeugte Wärme gut über die Grundplatte 110 und die Zylindersegmentklötze 112 zu beiden Seiten der Bearbeitungsebene F-X in das Maschinengehäuse 18 abgeleitet wird. In einer nicht gezeigten Alternative kann der Fast-Tool-Servo auch ein im Wesentlichen zylindrisches Gehäuse aufweisen, welches ggf. unter Schmierung mit einem Wärmeleitfett formschlüssig in den Innenabschnitt des Maschinengehäuses eingepasst und dort geeignet festgesetzt ist.

In axialer Richtung gesehen liegt der Fast-Tool-Servo 28 am Abschlusswandbereich 104 des Maschinengehäuses 18 an, wobei zumindest das (die) am Fast-Tool-Servo 28 gehaltene(n) Werkzeug(e) die im Abschlusswandbereich 104 vorgesehene Durchtrittsöffnung 106 (vgl. Fig. 9) geeignet abgedichtet durchgreift und in den Arbeitsraum 24 vorsteht, wie z.B. in Fig. 6 zu sehen ist. Hierbei können die Werkzeuge 30, 30' beispielsweise mittels eines Halters 118 am Fast-Tool-Servo 28 gehalten werden, wie er aus der Druckschrift EP-A-1 916 060 bekannt ist, auf die bezüglich Aufbau und Funktion des Halters zur Vermeidung von Wiederholungen ausdrücklich verwiesen wird. Dieser Halter 118 kann vorteilhaft auch außerhalb der Maschine 10 voreingestellt werden.

Der innere Aufbau und die Funktion des hier gezeigten Fast-Tool-Servos 28 sind im Übrigen in der EP-A-1 779 967 detailliert beschrieben, auf die hiermit zur Vermeidung von Wiederholungen ausdrücklich Bezug genommen wird. Mittels des Fast-Tool-Servos 28 sind die Werkzeuge 30, 30' lagegeregelt, insbesondere oszillierend entlang der F-Achse bewegbar.

Was die Werkstückseite angeht, weist der Schlitten 32 gemäß Fig. 2 einen im Wesentlichen O-förmigen Querschnitt auf, mit einem zentralen Aufnahmeraum 120 für die Werkstückspindel 26. Die Werkstückspindel 26 erstreckt sich durch den Aufnahmeraum 120 hindurch und ist in diesem auf geeignete Weise befestigt (nicht gezeigt) oder alternativ direkt integriert, mit dem Schlitten als Spindelgehäuse (ebenfalls nicht dargestellt). Am vom Arbeitsraum 24 abgewandten Ende trägt die Werkstückspindel 26 im dargestellten Ausführungsbeispiel einen pneumatischen Entspannzylinder 122 für eine an sich bekannte, federvorgespannte Spannzange 124, die dazu dient, das auf einem Blockstück aufgeblockte Brillenglas L im Arbeitsraum 24 drehmitnahmefest an der Werkstückspindel 26 zu spannen. Mit ihrem Spannzangenende erstreckt sich die Werkstückspindel 26 in den Arbeitsraum 24 hinein, wobei sie die Aussparung 78 in der Wandscheibe 76 des Maschinengehäuses 18 (siehe Fig. 10) durchgreift. Der offene Querschnitt zwischen Werkstückspindel 26 und Aussparung 78 wird hierbei unter Zuhilfenahme einer handelsüblichen Edelstahlblechlamellen-Abdeckung 126 mit rückseitigem Faltenbalg variabel überbrückt und zum Arbeitsraum 24 hin abgedichtet. Mittels der Werkstückspindel 26 ist das daran gehaltene Brillenglas L in der Winkellage geregelt um die Werkstück-Drehachse B drehend antreibbar. Das hierfür erforderliche rotative Messsystem ist nicht näher gezeigt.

Der Schlitten 32, der in Richtung der X-Achse zu beiden Seiten einen gummielastischen Anschlagspuffer 128 trägt, ist mittels eines Linearmotors 130 antreibbar. Der Linearmotor 130 weist ein Primärteil 132 mit Spulen und ein Sekundärteil 134 mit Magnetplatten auf. Während der Primärteil 132 in Langstatorausführung am Maschinengehäuse 18, genauer auf der Innenfläche 70 des quaderförmigen Wandabschnitts 60 des Maschinengehäuses 18 befestigt ist, wobei sich der Primärteil 132 in Richtung der X-Achse annähernd über die gesamte Breite der auch als Kühlfläche wirkenden Innenfläche 70 erstreckt, ist der Sekundärteil 134 in den Figuren über dem Primärteil 132 von unten am Schlitten 32 angebracht.

Die Führungsanordnung 38 für den Schlitten 32 ist am besten in den Fig. 2, 5 und 6 zu erkennen. Sie umfasst im dargestellten Ausführungsbeispiel (Führung der Firma NB, wie eingangs erwähnt) zwei Führungsschienen 136, 138 und insgesamt vier Führungsschuhe 140, 142 die paarweise den Führungsschienen 136, 138 zugeordnet sind. Die Führungsschienen 136, 138 sind in paralleler Anordnung am Maschinengehäuse 18 befestigt, und zwar auf den Lagerflächen 82, 84 der quaderförmigen Wandabschnitte 58, 60, wobei sich die Führungsschienen 136, 138 in Richtung der X-Achse annähernd über die gesamte Breite der Lagerflächen 82, 84 erstrecken. Die mit den Führungsschienen 136, 138 eingreifenden Führungsschuhe 140, 142 hingegen sind in den Figuren unten und oben paarweise nebeneinander am Schlitten 32 angebracht. Somit ist sichergestellt, dass der Schlitten 32 auf beiden Seiten, d.h. hier oberhalb sowie unterhalb der Bearbeitungsebene F-X an Führungsflächen 34, 36 geführt ist.

Gemäß insbesondere Fig. 5 ist die obere Führungsschiene 136 mit den Führungsflächen 34 in Richtung der Mittelachse M des Maschinengehäuses 18 gesehen über, d.h. axial auf Höhe des Linearmotors 130 angeordnet, so dass kein Hebelarm bezüglich des Linearmotors 130 besteht, über den der Linearmotor 130 mit seinen Magnetkräften Dreh- bzw. Torsionsmomente an dieser Führungsschiene 136 aufbringen könnte. Außerdem ist gemäß Fig. 5 die untere Führungsschiene 138 mit den Führungsflächen 36 platzsparend auf der vom Arbeitsraum 24 abgewandten Seite des Linearmotors 130 angeordnet. Dies alles wird ermöglicht durch die vorbeschriebene Ausgestaltung der verhältnismäßig dicken, quaderförmigen Wandabschnitte 58, 60 des Maschinengehäuses 18, die im Übrigen fast den gleichen lichten Abstand zur Mittelachse M des Maschinengehäuses 18 aufweisen.

Bliebe zum Schlitten 32, dessen Führung und Antrieb noch zu erwähnen, dass die Werkstückspindel 26 mittels dieser Baugruppen entlang der X-Achse lagegeregelt bewegbar ist. Das hierfür erforderliche lineare Wegmesssystem ist in den Fig. 2, 4 und 5 mit 144 beziffert.

Wie schließlich den Fig. 3 bis 6 zu entnehmen ist sind die Gummi-Metall-Pufferelemente 22 so angeordnet, dass die hinteren zwei, an der Rückwand 16 des Maschinengestells 12 angebrachten Gummi-Metall-Pufferelemente 22 in der Bearbeitungsebene F-X liegen, während sich die unteren zwei, an der Oberseite 14 des Maschinengestells 12 montierten Gummi-Metall-Pufferelemente 22 in Richtung der X-Achse gesehen auf axialer Höhe des Fast-Tool-Servos 28 befinden. In Richtung der F-Achse gesehen sind die Gummi-Metall-Pufferelemente 22 axial auf Höhe des Fast-Tool-Servos 28 bzw. des Linearmotors 130 montiert. Insgesamt ist die vorbeschriebene Maschine 10 hinsichtlich Bauraumbedarf, Gewicht, Thermosymmetrie, Kraft-Wärmefluss, dynamischer Steifigkeit, Schwingungsdämpfung, thermischer Stabilität (ein Betrieb ohne Kühlaggregat ist ggf. möglich) und Arbeitsraum-Kapselung gegenüber vorbekannten Konzepten für kleinere Maschinen in der Brillenglasindustrie stark verbessert ausgebildet.

Die fräsende Randbearbeitung des an der Werkstückspindel 26 gehaltenen Brillenglases L mittels des Fräswerkzeugs 42 unter Zuhilfenahme der (winkel)lagegeregelten B- und X-Achsen sowie der drehzahlgesteuerten C-Achse der Maschine 10 bedarf an dieser Stelle keiner weiteren Erläuterung, da sie dem Fachmann hinlänglich bekannt ist. Gleiches gilt für die Drehbearbeitung der optisch aktiven Fläche des Brillenglases L mittels des Drehwerkzeugs 30, die unter Zuhilfenahme der (winkel)lagegeregelten B-, F- und X-Achsen der Maschine 10 erfolgt.

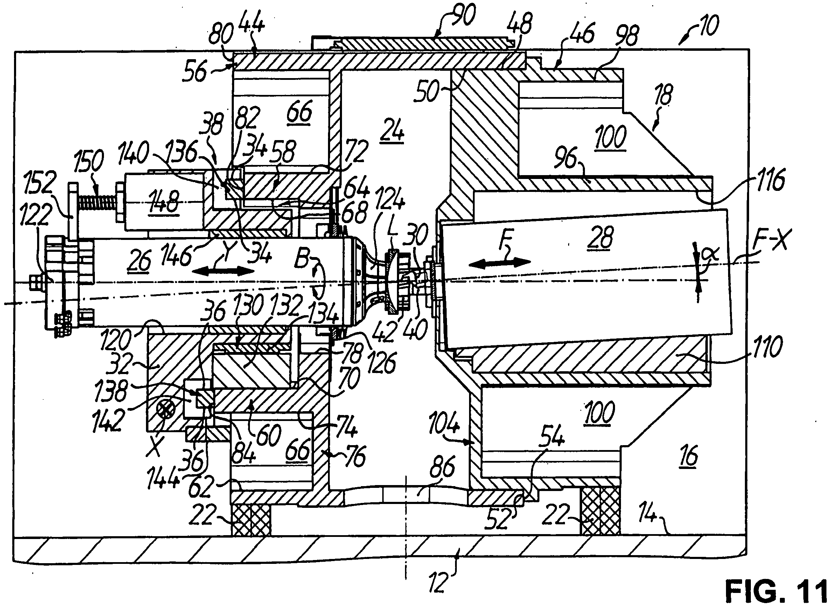

Abschließend soll das zweite Ausführungsbeispiel unter Bezugnahme auf die Fig. 11 nur insoweit beschrieben werden, als es sich von dem oben unter Bezugnahme auf die Fig. 1 bis 10 ausführlich erläuterten ersten Ausführungsbeispiel wesentlich unterscheidet, wobei gleiche oder entsprechende Bauteile bzw. -gruppen mit den gleichen Bezugszahlen versehen sind.

Wie eingangs schon erwähnt ist das zweite Ausführungsbeispiel gegenüber dem ersten Ausführungsbeispiel im Hinblick auf weitere Bearbeitungs- und Kalibriermöglichkeiten erweitert ausgebildet, nämlich insbesondere dahingehend, dass die Werkstückspindel 26 bezüglich des Schlittens 32 in Richtung der Werkstück-Drehachse B längsverschieblich ist (zusätzliche Y-Achse).

Hierfür ist die Werkstückspindel 26 zunächst mittels einer Lagerbuchse 146, bei der es sich z.B. um ein aerostatisches Lager, eine Kugelbuchse oder ein Gleitlager handeln kann, längsverschieblich im Aufnahmeraum 120 des Schlittens 32 gelagert. Am bzw. im Schlitten 32 ist ferner ein Drehantrieb 148 befestigt, etwa ein Hohlwellen-Servomotor, der über einen Gewindetrieb 150 (Gewindespindel, Gewindetriebmutter) mit einer Halterung 152 wirkverbunden ist, die ihrerseits an der Werkstückspindel 26 montiert ist. Durch Drehen der Gewindespindel über den Drehantrieb 148 ist es also möglich, die Werkstückspindel 26 relativ zum Schlitten 32 zu verschieben, um sie weiter in den Arbeitsraum 24 hinein oder heraus zu bewegen, etwa um eine Fräsbearbeitung auch an der Stirnfläche des Brillenglases L durchzuführen (wofür freilich auch das Fräswerkzeug geeignet anzustellen wäre). Als Alternative könnte hier auch ein Linearmotor (nicht gezeigt) zur Erzeugung dieser Linearbewegung eingesetzt werden. Auch diese Bewegung entlang der Y-Achse erfolgt CNC-lagegeregelt. Das hierfür erforderliche lineare Wegmesssystem ist in Fig. 11 aber nicht gezeigt.

Darüber hinaus ist bei dem zweiten Ausführungsbeispiel die Grundplatte 110 von der Seite bzw. im Schnitt gesehen keilförmig ausgebildet, so dass die F-Achse entsprechend dem Keilwinkel um einen Anstellwinkel α bezüglich der Werkstück-Drehachse B angestellt ist, wodurch sich eine entsprechende Winkellage zwischen der Bearbeitungsebene F-X und einer durch die Achsen X und Y definierten Bewegungsebene der Werkstückspindel 26 ergibt. Sinn und Zweck dieser Schrägstellung - nämlich eine Kalibrierung der Schneidenhöhe des Drehwerkzeugs 30 bezüglich der Werkstück-Drehachse B unter geeigneter Ansteuerung der F- und Y-Achsen - werden in der Druckschrift EP-A-1 719 585 ausführlich beschrieben, auf die hiermit zur Vermeidung von Wiederholungen nochmals ausdrücklich Bezug genommen wird.

Eine Maschine zur Bearbeitung von insbesondere Kunststoff-Brillengläsern hat ein Maschinengehäuse, das einen Arbeitsraum umschließt, der zwischen einer Werkstückspindel zum Drehantreiben des Brillenglases um eine Werkstück-Drehachse (B-Achse) und einem Fast-Tool-Servo zur Erzeugung einer oszillierenden Zustellbewegung (F-Achse) eines Drehwerkzeugs in Richtung des Brillenglases liegt. Für die Werkstückspindel ist ein antreibbarer, an wenigstens zwei Führungsflächen einer Führungsanordnung geführter Schlitten zur Erzeugung einer relativen Vorschubbewegung (X-Achse) zwischen Brillenglas und Drehwerkzeug vorgesehen, die quer zur Zustellbewegung verläuft und mit dieser eine Bearbeitungsebene (F-X-Ebene) definiert, in der bei der Bearbeitung ein Eingriff zwischen Drehwerkzeug und Brillenglas stattfindet. Für eine sehr kompakte und steife Ausgestaltung der Maschine ist die Führungsanordnung so am Maschinengehäuse angebracht, dass die Bearbeitungsebene zwischen den zwei Führungsflächen hindurch verläuft.

### BEZUGSZEICHENLISTE

- 10: Maschine
- 12: Maschinengestell
- 14: Oberseite
- 16: Rückwand
- 18: Maschinengehäuse
- 20: Verkleidung
- 22: Gummi-Metall-Pufferelement
- 24: Arbeitsraum
- 26: Werkstückspindel
- 28: Fast-Tool-Servo
- 30: Drehwerkzeug
- 30': Gravierwerkzeug
- 32: Schlitten
- 34: Führungsfläche
- 36: Führungsfläche
- 38: Führungsanordnung
- 40: Frässpindel
- 42: Fräswerkzeug
- 44: werkstückseitiger Gehäuseabschnitt
- 46: werkzeugseitiger Gehäuseabschnitt
- 48: Flanschfläche
- 50: Anschlussfläche
- 52: Anschlagsfläche
- 54: Stirnfläche
- 56: Außenabschnitt
- 58: quaderförmiger Wandabschnitt
- 60: quaderförmiger Wandabschnitt
- 62: Innenumfangsfläche
- 64: Aufnahmeraum
- 66: Rippe
- 68: Innenfläche
- 70: Innenfläche
- 72: Außenfläche
- 74: Außenfläche
- 76: Wandscheibe
- 78: Aussparung
- 80: Stirnfläche
- 82: Lagerfläche
- 84: Lagerfläche
- 86: Abflussöffnung
- 88: Zugangsöffnung
- 90: Schwenktür
- 92: Handgriff
- 94: Führungsbahn
- 95: Blechabdeckung
- 96: Innenabschnitt
- 98: Außenabschnitt
- 100: Steg
- 102: Aussparung
- 104: Abschlusswandbereich
- 106: Durchtrittsöffnung (Fast-Tool-Servo)
- 108: Durchtrittsöffnung (Frässpindel)
- 110: Grundplatte
- 112: Zylindersegmentklotz
- 114: Spannschraube
- 116: Innenumfangsfläche
- 118: Halter
- 120: Aufnahmeraum
- 122: Entspannzylinder
- 124: Spannzange
- 126: Edelstahlblechlamellen-Abdeckung
- 128: Anschlagspuffer
- 130: Linearmotor
- 132: Primärteil
- 134: Sekundärteil
- 136: Führungsschiene
- 138: Führungsschiene
- 140: Führungsschuh
- 142: Führungsschuh
- 144: lineares Wegmesssystem
- 146: Lagerbuchse
- 148: Drehantrieb
- 150: Gewindetrieb
- 152: Halterung

- α: Anstellwinkel zwischen den Ebenen F-X und X-Y
- B: Werkstück-Drehachse (winkellagegeregelt)
- C: Werkzeug-Drehachse (drehzahlgesteuert)
- F: Linearachse Fast-Tool (lagegeregelt)
- X-Y: Bewegungsebene Werkstück
- F-X: Bearbeitungsebene
- L: Brillenglas
- M: Mittelachse
- X: Linearachse Werkstück (lagegeregelt)
- Y: Linearachse Werkstück (lagegeregelt)

## Patentansprüche

1. Maschine (10) zur Bearbeitung von optischen Werkstücken (L), insbesondere von Kunststoff-Brillengläsern, mit einem Maschinengehäuse (18), das einen Arbeitsraum (24) umschließt, der zwischen einer am Maschinengehäuse (18) angeordneten Werkstückspindel (26), mittels der das Werkstück (L) um eine Werkstück-Drehachse (B) drehend antreibbar ist, und einem am Maschinengehäuse (18) angeordneten Fast-Tool-Servo (28) zur Erzeugung einer oszillierenden Zustellbewegung (F-Achse) eines Drehwerkzeugs (30) in Richtung des Werkstücks (L) liegt, wobei für die Werkstückspindel (26) ein antreibbarer, an wenigstens zwei Führungsflächen (34, 36) einer Führungsanordnung (38) geführter Schlitten (32) vorgesehen ist, mittels dessen zwischen Werkstück (L) und Drehwerkzeug (30) eine relative Vorschubbewegung (X-Achse) erzeugbar ist, die quer zur Zustellbewegung (F-Achse) verläuft und mit dieser eine Bearbeitungsebene (F-X) definiert, in der bei der Bearbeitung ein Eingriff zwischen Drehwerkzeug (30) und Werkstück (L) stattfindet, wobei die Führungsanordnung (38) derart am Maschinengehäuse (18) angebracht ist, dass die Bearbeitungsebene (F-X) zwischen den zwei Führungsflächen (34, 36) hindurch verläuft, und wobei der Schlitten (32) im Querschnitt gesehen im Wesentlichen O-förmig ist und einen zentralen Aufnahmeraum (120) für die Werkstückspindel (26) aufweist.

2. Maschine (10) nach Anspruch 1, wobei der Schlitten (32) mittels eines Linearmotors (130) antreibbar ist, der ein Primärteil (132) mit Spulen und ein Sekundärteil (134) mit Magnetplatten aufweist, und wobei der Primärteil (132) in Langstatorausführung am Maschinengehäuse (18) befestigt ist, während der Sekundärteil (134) am Schlitten (32) angebracht ist.

3. Maschine (10) nach Anspruch 1 oder 2, wobei die Führungsanordnung (38) zwei am Maschinengehäuse (18) angebrachte Führungsschienen (136, 138), die jeweils wenigstens eine der Führungsflächen (34, 36) ausbilden, und wenigstens zwei am Schlitten (32) befestigte Führungsschuhe (140, 142) aufweist, die jeweils einer Führungsschiene (136, 138) zugeordnet sind.

4. Maschine (10) nach den Ansprüchen 2 und 3, wobei in Richtung einer Mittelachse (M) des Maschinengehäuses (18) gesehen eine der Führungsschienen (136) axial auf Höhe des Linearmotors (130) angeordnet ist und/oder die andere Führungsschiene (138) auf einer vom Arbeitsraum (24) abgewandten Seite des Linearmotors (130) angeordnet ist.

5. Maschine (10) nach einem der vorhergehenden Ansprüche, wobei der Fast-Tool-Servo (28) auf beiden Seiten der Bearbeitungsebene (F-X) über Befestigungsmittel (110, 112, 114) wärmeleitend mit dem Maschinengehäuse (18) verbunden und statisch verklemmt ist.

6. Maschine (10) nach einem der vorhergehenden Ansprüche, wobei der vom Maschinengehäuse (18) begrenzte Arbeitsraum (24) in einem Schnitt senkrecht zur Mittelachse (M) des Maschinengehäuses (18) gesehen einen im Wesentlichen kreisrunden Querschnitt aufweist.

7. Maschine (10) nach einem der vorhergehenden Ansprüche, wobei das Maschinengehäuse (18) einen werkstückseitigen Gehäuseabschnitt (44) und einen werkzeugseitigen Gehäuseabschnitt (46) aufweist, die einteilig oder als separate, direkt oder indirekt miteinander verbundene Teile ausgebildet sind.

8. Maschine (10) nach Anspruch 7, wobei der werkzeugseitige Gehäuseabschnitt (46) einen rohrförmigen, im Wesentlichen hohlzylindrischen Innenabschnitt (96) zur Aufnahme des Fast-Tool-Servos (28) und einen den Innenabschnitt (96) umgebenden, rohrförmigen, im Wesentlichen hohlzylindrischen Außenabschnitt (98) aufweist, die über speichenartig verlaufende Stege (100) miteinander verbunden sind.

9. Maschine (10) nach Anspruch 7 oder 8, wobei der werkstückseitige Gehäuseabschnitt (44) einen rohrförmigen, im Wesentlichen hohlzylindrischen Außenabschnitt (56) aufweist, der zwei im Wesentlichen parallel zueinander und zur Mittelachse (M) des Maschinengehäuses (18) angeordnete, im Wesentlichen quaderförmige Wandabschnitte (58, 60) umgibt, die sich bis zu einer Innenumfangsfläche (62) des Außenabschnitts (56) erstrecken und zwischen sich einen Aufnahmeraum (64) für den Schlitten (32) und dessen Antrieb (130) begrenzen.

10. Maschine (10) nach Anspruch 9, wobei die im Wesentlichen quaderförmigen Wandabschnitte (58, 60) jeweils eine Innenfläche (68, 70) und eine Außenfläche (72, 74) aufweisen, die im Wesentlichen parallel zur Mittelachse (M) des Maschinengehäuses (18) verlaufen und in Richtung des Arbeitsraums (24) an eine den Arbeitsraum (24) begrenzende Wandscheibe (76) anschließen, welche im Wesentlichen senkrecht zur Mittelachse (M) des Maschinengehäuses (18) verläuft und sich ringsum bis zu der Innenumfangsfläche (62) des Außenabschnitts (56) erstreckt.

11. Maschine (10) nach Anspruch 9 oder 10, wobei die im Wesentlichen quaderförmigen Wandabschnitte (58, 60) mit ihren vom Arbeitsraum (24) abgewandten Stirnseiten auf beiden Seiten der Bearbeitungsebene (F-X) jeweils eine Lagerfläche (82, 84) für die Führungsanordnung (38) ausbilden.

12. Maschine (10) nach einem der vorhergehenden Ansprüche, wobei das Maschinengehäuse (18) neben dem Fast-Tool-Servo (28) mit einer Aussparung (102) zur Aufnahme einer Frässpindel (40) versehen ist.

13. Maschine (10) nach einem der vorhergehenden Ansprüche, wobei die Werkstückspindel (26) bezüglich des Schlittens (32) in Richtung der Werkstück-Drehachse (B) längsverschieblich ist (Y-Achse).

14. Maschine (10) nach einem der vorhergehenden Ansprüche, wobei das Maschinengehäuse (18) aus einer Leichtmetall-, insbesondere einer Aluminiumlegierung besteht.

## Claims

1. Machine (10) for processing optical workpieces (L), particularly spectacle lenses of plastics material, comprising a machine housing (18) enclosing a working space (24), which lies between a workpiece spindle (26), which is arranged at the machine housing (18) and by means of which the workpiece (L) is drivable to rotate about a workpiece axis (B) of rotation, and a fast-tool servo (28), which is arranged at the machine housing (18), for producing an oscillating feed movement (F axis) of a lathe tool (30) in the direction of the workpiece (L), wherein provided for the workpiece spindle (26) is a drivable carriage (32), which is guided at at least two guide surfaces (34, 36) of a guide arrangement (38) and by means of which a relative advance movement (X axis) between workpiece (L) and lathe tool (30) can be produced, the advance movement running transversely to the feed movement (F axis) and defining therewith a processing plane (F-X) in which engagement between lathe tool (30) and workpiece (L) takes place for the processing, wherein the guide arrangement (38) is so mounted on the machine housing (18) that the processing plane (F-X) extends between the two guide surfaces (34, 36), and wherein the carriage (32) is substantially O-shaped as seen in cross-section and has a central receiving space (120) for the workpiece spindle (26).

2. Machine (10) according to claim 1, wherein the carriage (32) is drivable by means of a linear motor (130) comprising a primary part (132) with coils and a secondary part (134) with magnet plates and wherein the primary part (132) is attached to the machine housing (18) in long-stator format, whereas the secondary part (134) is mounted on the carriage (32).

3. Machine (10) according to claim 1 or 2, wherein the guide arrangement (38) comprises two guide rails (136, 138), which are mounted on the machine housing (18) and which each form at least one of the guide surfaces (34, 36), and at least two guide shoes (140, 142), which are attached to the carriage (32) and which are each associated with a respective one of the guide rails (136, 138).

4. Machine (10) according to claims 2 and 3, wherein as seen in the direction of a center axis (M) of the machine housing (18) one of the guide rails (136) is arranged axially at the height of the linear motor (130) and/or the other guide rail (138) is arranged on a side of the linear motor (130) remote from the working space (24).

5. Machine (10) according to any one of the preceding claims, wherein the fast-tool servo (28) is thermally conductively connected with the machine housing (18) and statically fixed in place on either side of the processing plane (F-X) by way of fastening means (110, 112, 114).

6. Machine (10) according to any one of the preceding claims, wherein the working space (24) bounded by the machine housing (18) has a substantially circular cross-section as seen in a section perpendicular to the center axis (M) of the machine housing (18).

7. Machine (10) according to any one of the preceding claims, wherein the machine housing (18) has a housing section (44) at the workpiece side and a housing section (46) at the tool side, the housing sections being constructed integrally or as separate parts connected together directly or indirectly.

8. Machine (10) according to claim 7, wherein the housing section (46) at the tool side has a tubular, substantially hollow-cylindrical section (96) for reception of the fast-tool servo (28) and a tubular, substantially hollow-cylindrical outer section (98) surrounding the inner section (96), the inner and outer sections being connected together by way of webs (100) extending in spoke form.

9. Machine (10) according to claim 7 or 8, wherein the housing section (44) at the tool side has a tubular, substantially hollow-cylindrical outer section (56) surrounding two substantially block-shaped wall sections (58, 60), which are arranged substantially parallel to one another and to the center axis (M) of the machine housing (18) and extend up to an inner circumferential surface (62) of the outer section (56) and which bound therebetween a receiving space (64) for the carriage (32) and the drive (130) thereof.

10. Machine (10) according to claim 9, wherein the substantially block-shaped wall sections (58, 60) each have an inner surface (68, 70) and an outer surface (72, 74), which extend substantially parallel to the center axis (M) of the machine housing (18) and in the direction of the working space (24) are connected with a wall disc (76), which bounds the working space (24) and runs substantially perpendicularly to the center axis (M) of the machine housing (18) and which extends peripherally up to the inner circumferential surface (62) of the outer section (56).

11. Machine (10) according to claim 9 or 10, wherein the substantially block-shaped wall sections (58, 60) each form by the end faces thereof remote from the working space (24) a respective bearing surface (82, 84) for the guide arrangement (38) on either side of the processing plane (F-X).

12. Machine (10) according to any one of the preceding claims, wherein the machine housing (18) is provided near the fast-tool servo (28) with a cut-out (102) for receiving a milling spindle (40).

13. Machine (10) according to any one of the preceding claims, wherein the workpiece spindle (26) is longitudinally displaceable (Y axis) with respect to the carriage (32) in the direction of the workpiece axis (B) of rotation.

14. Machine (10) according to any one of the preceding claims, wherein the machine housing (18) consists of a light-metal alloy, particularly aluminum alloy.

## Revendications

1. Machine (10) pour l'usinage de pièces d'oeuvre optiques (L), notamment de verres de lunettes en matériau synthétique, comprenant un carter de machine (18) entourant une chambre de travail (24), qui se situe entre une broche porte-pièce (26) agencée sur le carter de machine (18) et au moyen de laquelle la pièce d'oeuvre (L) peut être entraînée en rotation autour d'un axe de rotation de pièce (B), et un mécanisme d'assistance d'outil rapide (28) agencé sur le carter de machine (18) et destiné à produire un mouvement d'oscillation dans une direction de prise de passe (axe F) d'un outil de tournage (30) en direction de la pièce d'oeuvre (L), machine
dans laquelle pour la broche porte-pièce (26), il est prévu un chariot (32) pouvant être entraîné et guidé sur au moins deux surfaces de guidage (34, 36) d'un agencement de guidage (38), et au moyen duquel il est possible de produire, entre la pièce d'oeuvre (L) et l'outil de tournage (30), un mouvement d'avance relatif (axe X), qui s'étend transversalement au mouvement de prise de passe (axe F) et définit avec ce dernier, un plan d'usinage (F-X) dans lequel a lieu, lors de l'usinage, une interaction entre l'outil de tournage (30) et la pièce d'oeuvre (L),
dans laquelle l'agencement de guidage (38) est placé sur le carter de machine (18) de manière telle, que le plan d'usinage (F-X) passe entre les deux surfaces de guidage (34, 36),
et dans laquelle le chariot (32) présente, vu en section transversale, sensiblement une forme de O, et comporte un logement d'accueil central (120) pour la broche porte-pièce (26).

2. Machine (10) selon la revendication 1, dans laquelle le chariot (32) peut être entraîné par un moteur linéaire (130), qui présente une partie primaire (132) avec des enroulements, et une partie secondaire (134) avec des plaques magnétiques, et dans laquelle la partie primaire (132) est fixée, sous forme de stator longitudinal allongé, au carter de machine (18), tandis que la partie secondaire (134) est placée sur le chariot (32).

3. Machine (10) selon la revendication 1 ou la revendication 2, dans laquelle l'agencement de guidage (38) comprend deux glissières de guidage (136, 138) placées sur le carter de machine (18) et formant respectivement au moins l'une des surfaces de guidage (34, 36), ainsi qu'au moins deux patins de guidage (140, 142) fixés au chariot (32) et associés respectivement à une glissière de guidage (136, 138).

4. Machine (10) selon les revendications 2 et 3, dans laquelle, vu dans la direction d'un axe central (M) du carter de machine (18), l'une des glissières de guidage (136) est agencée axialement à hauteur du moteur linéaire (130) et/ou l'autre glissière de guidage (138) est agencée sur un côté du moteur linéaire (130) opposé à celui dirigé vers la chambre de travail (24).

5. Machine (10) selon l'une des revendications précédentes, dans laquelle le mécanisme d'assistance d'outil rapide (28), sur les deux côtés du plan d'usinage (F-X), est relié par une liaison de conduction de chaleur au carter de machine (18) par l'intermédiaire de moyens de fixation (110, 112, 114), et est serré statiquement.

6. Machine (10) selon l'une des revendications précédentes, dans laquelle la chambre de travail (24) délimitée par le carter de machine (18) présente, vu dans une coupe perpendiculaire à l'axe central (M) du carter de machine (18), une section transversale ronde sensiblement circulaire.

7. Machine (10) selon l'une des revendications précédentes, dans laquelle le carter de machine (18) présente une partie de carter côté pièce d'oeuvre (44) et une partie de carter côté outil (46), qui sont réalisées d'un seul tenant ou en tant que parties séparées, reliées mutuellement de manière directe ou indirecte.

8. Machine (10) selon la revendication 7, dans laquelle la partie de carter côté outil (46) présente un secteur intérieur (96) tubulaire, sensiblement cylindrique creux, destiné à accueillir le mécanisme d'assistance d'outil rapide (28), et un secteur extérieur (98) tubulaire, sensiblement cylindrique creux, entourant le secteur intérieur (96), les deux secteurs étant reliés l'un à l'autre par des nervures (100) s'étendant à la manière de rayons de roue.

9. Machine (10) selon la revendication 7 ou la revendication 8, dans laquelle la partie de carter côté pièce d'oeuvre (44) présente un secteur extérieur (56) tubulaire, sensiblement cylindrique creux, qui entoure deux tronçons de paroi (58, 60) de forme sensiblement parallélépipédique, agencés sensiblement de manière parallèle l'un à l'autre et à l'axe central (M) du carter de machine (18), et qui s'étendent jusqu'à une surface périphérique intérieure (62) du secteur extérieur (56) et délimitent entre eux un espace d'accueil (64) pour le chariot (32) et son entraînement (130).

10. Machine (10) selon la revendication 9, dans laquelle les tronçons de paroi (58, 60) présentent chacun une surface intérieure (68, 70) et une surface extérieure (72, 74), qui s'étendent sensiblement de manière parallèle à l'axe central (M) du carter de machine (18), et, en direction de la chambre de travail (24), se raccordent à un disque de paroi (76) délimitant la chambre de travail (24) et s'étendant sensiblement de manière perpendiculaire à l'axe central (M) du carter de machine (18) et, sur son pourtour, jusqu'à la surface périphérique intérieure (62) du secteur extérieur (56).

11. Machine (10) selon la revendication 9 ou la revendication 10, dans laquelle les tronçons de paroi (58, 60) de forme sensiblement parallélépipédique forment avec leurs faces frontales opposées à celles dirigé vers la chambre de travail (24), sur les deux côtés du plan d'usinage (F-X), respectivement une surface de montage (82, 84) pour l'agencement de guidage (38).

12. Machine (10) selon l'une des revendications précédentes, dans laquelle le carter de machine (18) est pourvu, en-dehors du mécanisme d'assistance d'outil rapide (28), d'un évidement (102) destiné à accueillir une broche de fraisage (40).

13. Machine (10) selon l'une des revendications précédentes, dans laquelle la broche porte-pièce (26) peut coulisser longitudinalement (axe Y) par rapport au chariot (32), dans la direction de l'axe de rotation de pièce (B).

14. Machine (10) selon l'une des revendications précédentes, dans laquelle le carter de machine (18) est réalisé en un métal léger, notamment un alliage d'aluminium.
